# EUROPÄISCHE PATENTSCHRIFT

(11) **EP 0 721 410 B1**
(45) Veröffentlichungstag und Bekanntmachung des Hinweises auf die Patenterteilung: **26.03.1997**
(21) Anmeldenummer: 94926786.8
(22) Anmeldetag: 15.09.1994
(51) Int. Cl.: B61F 5/50, F16C 7/00

(54) **VERBUNDBAUTEIL ALS ZUG-DRUCK-STANGE FÜR SCHIENENFAHRZEUGE**
COMPOSITE-MATERIAL PUSH-PULL LINK BAR FOR RAIL VEHICLES
ELEMENT DE STRUCTURE COMPOSITE UTILISE COMME BARRE DE LIAISON POUR VEHICULES FERROVIAIRES

(30) Priorität: 06.10.1993 DE 4334629; 28.06.1994 DE 4422579
(43) Veröffentlichungstag der Anmeldung: 17.07.1996
(73) Patentinhaber: ABB Daimler-Benz Transportation (Deutschland) GmbH, 16761 Hennigsdorf (DE)
(72) Erfinder: SCHÄHL, Wolfgang, D-16761 Hennigsdorf (DE); WEICHELT, Peter, D-14621 Schönwalde (DE); RUDOLPH, Ulrich, D-10557 Berlin (DE); SPUR, Günter, D-14193 Berlin (DE); MOHR, Hartmut, D-13187 Berlin (DE)
(86) Internationale Anmeldenummer: DE9401069
(87) Internationale Veröffentlichungsnummer: WO9509754

(56) Entgegenhaltungen:
- EP-A- 0 032 051
- EP-A- 0 032 162
- EP-A- 0 052 993
- EP-A- 0 174 468

## Beschreibung

Die Erfindung bezieht sich auf ein Verbundbauteil als Zug-Druck-Stange für Schienenfahrzeuge nach dem Oberbegriff des **Anspruchs 1**.

Bei Schienentriebfahrzeugen dienen Zug-Druck-Stangen z.B. zur Anlenkung des Drehgestells am drehzapfenlosen Wagenkasten des Schienentriebfahrzeugs zwecks Übertragung der im Fahrbetrieb auftretenden Zug- und Bremskräfte.

Derartige Zug-Druck-Stangen müssen sehr hohen Belastungen infolge Zug- und Bremskräften, kurzzeitigen statischen und dynamischen Belastungen des Drehgestells bis zu 5g ohne Schädigung standhatten. Im Fahrbetrieb ist die Zug-Druck-Stange beim Durchfahren von Bögen, beim Befahren von Ablaufbergen sowie durch Nicken und Wanken des Drehgestells radialen und kardanischen Auslenkungen zwischen Drehgestell und Wagenkasten ausgesetzt, denen durch endseitige Gelenkverbindungen der Zug-Druck-Stange Rechnung getragen wird.

Es ist bekannt, derartige Zug-Druck-Stangen überwiegend aus metallischen Werkstoffen zu gestalten (DE 29 29 927 C2). In einer häufig verwendeten Bauform trägt eine Verbindungsstange an ihren Enden angeflanschte Gelenkbauteile. Diese Gelenkbauteile umgreifen paßgerecht an Bauteilen des Wagenkastens sowie am Drehgestell befestigte, z.B. aus Stahlguß gefertigte Führungszapfen und sind mit diesen über ein Gelenklager verbunden. Um bei Anfahr- und Bremsvorgängen Kraftstöße zwischen Drehgestell und Wagenkasten zu verringern, muß die Anlenkung durch eine elastische Verbindung erfolgen: Da die Verbindungsstange selbst starr ist, wird häufig das Gelenklager als ein außen und innen mit je einer Führungshülse zusammenvulkanisiertes Elastomerteil gestaltet.

Ein Problem dieser Lösung besteht darin, daß bei Leistungserhöhung des Schienentriebfahrzeugs notwendige festigkeits- und stabilitätssteigernde Maßnahmen an den Zug-Druck-Stangen zur Masseerhöhung führen, was die Gesamtmassebilanz des Fahrzeugs negativ beeinflußt. Wünschenswert dagegen ist sogar, die Masse nach Möglichkeit zu reduzieren. Ein weiteres Problem besteht darin, daß für die Dimensionierung einer solchen verstärkten Zug-Druck-Stange und deren Einbau nur eine sehr begrenzte Einbauhöhe zur Verfügung steht. Weiterhin ist von Nachteil, daß die mit definierter Elastizität ausgestatteten Elastomerteile der üblichen Gelenke durch Umwelteinflüsse, Öl, Reinigungsmittel und Oxidation ihre Eigenschaffen verändern. Andere standfeste Gelenkbauteile, wie z.B. Radiallager, sind nicht einsetzbar, da sie in unvorteilhafter Weise die Elastizität der Verbindung zwischen Drehgestell und Wagenkasten reduzieren. Eine hohe Elastizität dieser Anlenkung zwischen Wagenkasten und Drehgestell ist jedoch wünschenswert, da damit die Anregung von Biegeschwingungen im Wagenkasten vermindert werden kann, die daraus resultierenden Vertikalbeschleunigungen und die dynamische Belastung der Bauteile im Wagenkasten reduzierbar ist sowie der Fahrkomfort auf dem Führerstand erhöht werden kann.

Lösungsansatz für diese Probleme ist der Versuch, eine Zug-Druck-Stange aus Faserverbundwerkstoffen zu gestalten.

In der DE 29 51 111 A1 ist ein Verbundbauteil als Pleuel für Brennkraftmaschinen beschrieben, bei dem ein Pleuelschaft zwischen zwei Lageraugen angeordnet ist. Um diese Anordnung ist ein Gurt aus kunstharzgetränkten Fasersträngen gelegt. Der Pleuelschaft besteht aus zwei mit dem Rücken zueinander liegenden U-Profilen, die aus faserverstärktem Kunststoff gepreßt sind und in die längs je ein Kern aus dem gleichen Werkstoff eingelegt ist. Die gesamte Anordnung wird von senkrecht zur Längsachse aufgewickelten kunstharzgetränkten Faserlagen umschlossen. Bei diesem Schaftaufbau dienen die Kerne zur Aufnahme der Druckbelastungen, der Gurt zur Aufnahme der Zugkräfte und die U-Profile zusammen mit der quer aufgebrachten Wicklung als Schubverbund für die Aufnahme der Biegebelastung des Pleuels. Als Fasern sollen wegen ihrer Festigkeit und des Elastizitätsmoduls insbesondere Kohlenstoffasern, aber auch Glas oder Kunststoff verwendet werden.

Die Einleitung der Kräfte und die Beanspruchungsbedingungen für ein Pleuel einer Kraftmaschine weichen jedoch erheblich von dem beschriebenen Einsatzfall einer Zug-Druck-Stange für Schienenfahrzeuge ab, so daß eine einfache Übernahme des Aufbaus und Höherdimensionierung dieses bekannten Verbundbauteils nicht in Betracht kommt.

Aufgabe der Erfindung ist es, eine Konstruktionslösung für ein Verbundbauteil der eingangs genannten Art vorzulegen, mit dem die Anforderungen für eine Zug-Druck-Stange, die Zug- und Bremskräfte zwischen dem Drehgestell eines Schienentriebfahrzeugs und seinem Wagenkasten übertragen kann und eine definierte Elastizität aufweist, erfüllt werden und das mit einem einfachen Verfahren herstellbar ist. Diese Aufgabe wird gemäß der Erfindung gelöst durch die im **Anspruch 1** herausgestellten Merkmale. Zweckmäßige Ausgestaltungen des Erfindungsgedankens sind Gegenstand der **Unteransprüche 2** bis **6**.

Die Erfindung ist in den Zeichnungen beispielsweise veranschaulicht und nachstehend im einzelnen beschrieben. Es zeigt:
- **Figur 1**: die Draufsicht und ein teilweises Schnittbild eines Verbundbauteils,
- **Figur 2**: ein Schnittbild der Seitenansicht des Verbundbauteils nach **Figur 1** und

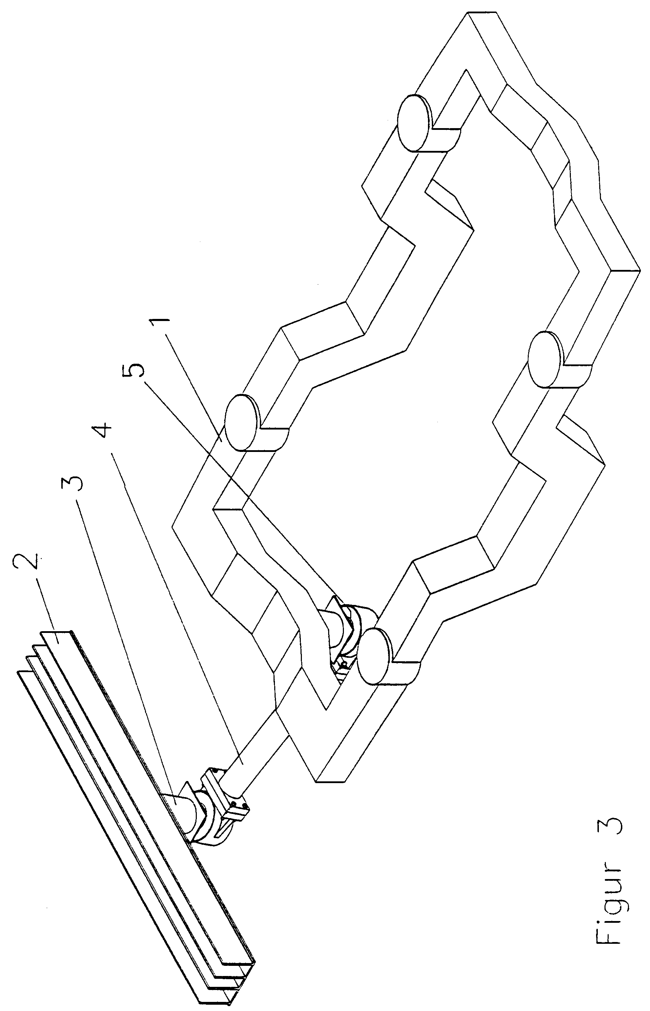

- **Figur 3**: zum Vergleich eine Zug-Druck-Stange herkömmlicher Bauweise sowie die Einbaulage einer Zug-Druck-Stange im Schienentriebfahrzeug.

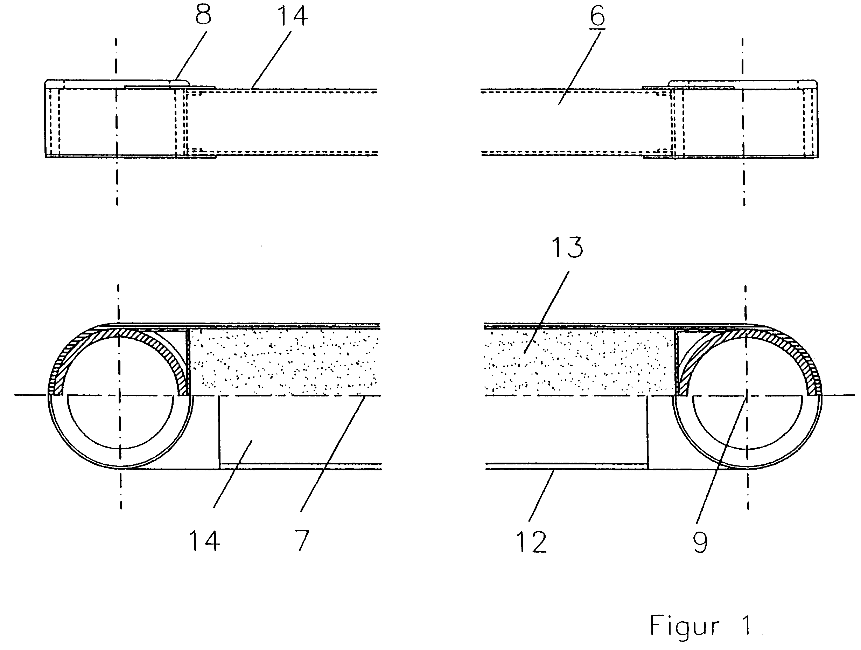

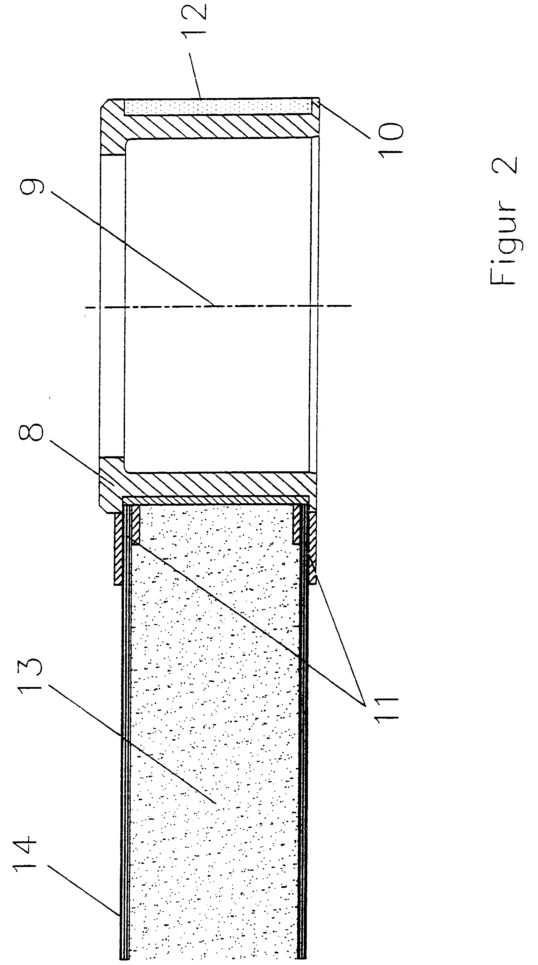

Bei dem in **Figur 1** und **2** dargestellten Ausführungsbeispiel eines erfindungsgemäß aufgebauten Verbundbauteils nimmt ein stabförmiges Strukturelement **7** die von den Anschlußelementen **8** aus Drehgestellrahmen **1** und Wagenkastenquerträger **2** abgeleiteten **Druckkräfte** auf und eine das gesamte Verbundbauteil **6** umschlingende Faserverbundwicklung **12** die **Zugkräfte**.

Am Strukturelement **7** sind stirnseitig metallische Anschlußelemente **8** mit gerundetem Kopf angeordnet, die über ein Krafteinleitungsauge **9** zur nachträglichen Aufnahme von Gelenkbauteilen verfügen. Diese Konstruktion ermöglicht, die Krafteinleitungsaugen sicher in einer Montage- und Wickeleinrichtung einzuspannen und ihren axialen Abstand voneinander präzise zu kalibrieren.

Das stabförmige, die **Druckkräfte** von den Anschlußelementen **8** aufnehmende Strukturelement **7** wird aus einer Sandwich-Struktur gebildet, die aus einem Kern **13** und zwei schubsteifen Häuten **14** zusammengefügt ist. Der Kern **13** mit rechteckigem Querschnitt besteht gemäß Ausführungsbeispiel aus Hartschaum. Die in ihrer Längsrichtung drucksteifen Häute **14** sind aus in einer ausgehärteten Kunstharzmatrix eingebetteten achsparallel unidirektionalen Glasfasern hergestellt und unter Druck auf zwei gegenüberliegenden Längsseiten des Kerns **13** aufgeklebt. Diese Häute **14** können aus Vormaterial zugeschnitten oder aus Prepregs gelegt, im Autoklaven konsolidiert und verfestigt und dann zugeschnitten sein.

Die Einleitung der Druckkräfte in das Verbundbauteil **6** erfolgt über die senkrecht zu seiner Längsachse angeordneten Berührungsflächen zwischen dem Kern **13** und den in Längsrichtung drucksteifen Häuten **14** mit den Anschlußelementen **8**. Um die Knickgefahr zu verringern, sind die Häute **14** im Krafteinleitungsbereich durch eine U-förmige Stütznut **11** der Anschlußelemente **8** zweiseitig formschlüssig umfaßt und damit gegen Ausknicken gestützt.

Der Kern **13** kann je nach Beanspruchungsbedingungen auch aus anderen Materialien, wie sie beispielhaft in **Anspruch 2** genannt sind, bestehen.

Das Gebilde aus stabförmigem Strukturelement **7** und endseitigen Anschlußelementen **8** ist in axialer Richtung von einer Faserverbundwicklung **12** aus einer definierten Anzahl harzimprägnierter Glasrovingfäden umschlungen, die entlang den nicht die schubsteifen Häute **14** tragenden Längsseiten des Kerns **13** verlaufen und die nach dem Umwickeln seitlich auf den Kern **13** kalt aufgepreßt, gehärtet und dann unter Wärmeeinwirkung getempert wurden. Diese Faserverbundwicklung nimmt die in die Zug-Druck-Stange **4** eingeleiteten **Zugkräfte** auf. Die Anzahl der Umschlingungen der Glasrovingfäden bestimmt sich aus der höchsten aufzunehmenden Zugbeanspruchung; die Vorspannung beim Wickeln ist so gewählt, daß die Glasrovingfäden selbst bei größter Druckbeanspruchung der Zug-Druck-Stange **4** und höchster Wärmedehnung innerhalb der Faserverbundwicklung **12** auf Zug beansprucht bleiben.

Damit die Windungen der Faserverbundwicklung bei der Herstellung wie auch unter Belastung nicht seitlich vom Kopf der Anschlußelemente **8** herabgleiten oder kriechen, sind diese an den Rändern mit einer seitlichen Schulter **10** versehen.

Zur weiteren Massereduzierung bei gleicher Stabilität sind sowohl für die Häute **14** als auch für die Faserverbundwicklung **12** anstelle von Glasfasern Materialien wie Kohlenstoff- oder Aramidfasern (einzeln oder im Hybridverbund, uni- oder multidirektional) einsetzbar. Anstelle einer Kunstharzmatrix kann auch thermoplastisches Matrixmaterial verwendet werden.

Wenn das Verbundbauteil **6** als Zug-Druck-Stange **4** zur Anlenkung an Führungszapfen **3** in seinen Gelenken **5** mit Gelenkbauteilen herkömmlicher, eingangs beschriebener Bauweise ausgestattet würde, müßte die Dimensionierung des stabförmigen Strukturelements **7** und der Faserverbundwicklung **12** berücksichtigen, daß bei kardanischer Auslenkung zwischen Drehgestellrahmen **1** und Wagenkastenquerträger **2** die in den Gelenken **5** eingesetzten Elastomerbauteile verformt würden und daraus eine Drehmomentenbeanspruchung resultierte, die die Zug-Druck-Stange **4** zu verdrehen und / oder zu verbiegen suchte.
Die dem erfindungsgemäßen Verbundbauteil eigene Längselastizität erlaubt es jedoch, in dem Krafteinleitungsauge **9** des Anschlußelements **8** Radialgelenklager anzuordnen, so daß eine nahezu momentenfreie, nur aus Axialkräften bestehende Beanspruchung des Verbundbauteils **6** erreicht und eine hinsichtlich Raumbedarf und Masse optimale Dimensionierung des Verbundbauteils realisiert werden kann, wobei die wartungsfreien Radialgelenklager nicht den Eigenschaftsveränderungen durch Verschmutzung und Beanspruchung wie die Elastomerteile herkömmlicher Lager unterliegen.

Untersuchungen haben bestätigt, daß die dem Verbundbauteil **6** eigene Längselastizität spürbaren Einfluß auf die Veränderung des Schwingungs- und Fahrverhaltens eines Schienentriebfahrzeugs hat: Die gegenüber herkömmlichen Zug-Druck-Stangen aus metallischen Werkstoffen wesentlich verringerte Steifigkeit des Verbundbauteils **6** reduziert die im Wagenkasten des Schienentriebfahrzeugs angeregten Biegeschwingungen derart, daß die im Wagenkasten wirkenden Vertikalbeschleunigungen vermindert werden, auf die im Wagenkasten untergebrachten Baugruppen und Bauteile geringere dynamische Belastungen wirken und der Fahrkomfort auf dem Führerstand des Schienentriebfahrzeugs deutlich verbessert wird.

Es kann bei bestimmten Einsatzfällen zweckmäßig sein, die Schubsteifigkeit des Verbundbauteils **6** zu erhöhen, indem zumindest über einen Teil der Länge des stabförmigen Strukturelements **7** eine zusätzliche (in den Zeichnungen nicht dargestellte) Umhüllung aufgebracht wird. Diese Umhüllung kann z.B. aus einem harzgtränkten Gewebeschlauch oder einer (an sich bekannten) senkrecht zur Längsachse aufgebrachten Umwicklung aus harzgetränkten Verstärkungsfasern bestehen, die anschließend gepreßt und ausgehärtet werden. Zum Schutz vor Umwelteinflüssen und mechanischer Beschädigung kann es erforderlich sein, daß auf dem Verbundbauteil **6** eine zusätzliche Umhüllung oder Beschichtung (z.B. aus einem hochdämpfenden Elastomer; in den Zeichnungen nicht dargestellt) aufgebracht ist. Zur Verbesserung des Brandverhaltens ist es zweckmäßig, daß die Umhüllung oder Beschichtung mit geeigneten flammwidrigen Harzsystemen, vorzugsweise Phenolharz, getränkt ist.

Der Einsatz eines Verbundbauteils der beschriebenen Art ist auch bei anderen Einsatzfällen insbesondere bei Schienenfahrzeugen denkbar, wo die elastische Übertragung von Zug- und Druckkräften erforderlich ist.

### Bezugszeichenliste:

- **1**: Drehgestellrahmen
- **2**: Wagenkastenquerträger
- **3**: Führungszapfen
- **4**: Zug-Druck-Stange
- **5**: Gelenk
- **6**: Verbundbauteil
- **7**: Stabförmiges Strukturelement
- **8**: Anschlußelement
- **9**: Lagerauge
- **10**: Schulter
- **11**: Stütznut
- **12**: Faserverbundwicklung
- **13**: Kern
- **14**: Haut

## Patentansprüche

1. Verbundbauteil als Zug-Druck-Stange für Schienenfahrzeuge mit endseitigen Anschlußelementen zur axialen Einleitung von Druck- und Zugkräften, mit einem für die Aufnahme und Übertragung von Druckkräften ausgebildeten stabförmigen Strukturelement und mit einer für die Aufnahme von Zugkräften in Längsrichtung des stabförmigen Strukturelements aufgebrachten und über die Anschlußelemente verlaufenden vorgespannten Faserverbundwicklung, die aus einer definierten Anzahl von Umschlingungen eines oder mehrerer Verstärkungsfasern besteht, die in einem gehärteten Matrixmaterial eingebettet sind, **gekennzeichnet dadurch, daß** das stabförmige Strukturelement (**7**) als Sandwich-Verbundkonstruktion ausgeführt ist, die aus einem längsverlaufenden Kern (**13**) und zwei auf gegenüberliegenden, von der Faserverbundwicklung (**12**) freien Längsseiten des Kerns (**13**) angeordneten, in ihrer Längsrichtung drucksteifen Häuten (**14**) besteht.

2. Verbundbauteil nach **Anspruch 1**, gekennzeichnet dadurch, daß der Kern (**13**) aus einem Hartschaum, einem Wabenmaterial, thermoplastischen Formteilen, gepreßten oder pultrudierten Profilen, einer uni- oder multidirektionalen Mono- oder Hybrid-Faserverbundkonstruktion oder aus Holz besteht.

3. Verbundbauteil nach **Anspruch 1** oder **2**, gekennzeichnet dadurch, daß die drucksteifen Häute (**14**) aus in einem gehärteten Matrixmaterial eingebetteten unidirektional und achsparallel angeordneten Verstärkungsfasern bestehen und mit dem Kern (**13**) verklebt sind.

4. Verbundbauteil nach einem der **Ansprüche 1** bis 3, gekennzeichnet dadurch, daß die Anschlußelemente (**8**) zur Übertragung der Druckkräfte in das stabförmige Strukturelement (**7**) auf den axialen Stirnseiten des Kerns (**13**) und der Häute (**14**) flächig abgestützt sind und die Häute (**14**) im Krafteinleitungsbereich durch eine schlitzförmige Stütznut (**11**) zweiseitig formschlüssig umfaßt sind.

5. Verbundbauteil nach einem der **Ansprüche 1** bis **4**, gekennzeichnet dadurch, daß die Anschlußelemente (**8**) jeweils ein quer zur Längsachse des Verbundbauteils liegendes Lagerauge (**9**) aufweisen, das für das Einpressen eines Gummigelenk- oder Radialgelenklagers ausgebildet ist.

6. Verbundbauteil nach einem der **Ansprüche 1** bis **5**, gekennzeichnet dadurch, daß das von der Faserverbundwicklung (**12**) umschlungene stabförmige Strukturelement (**7**) eine zusätzliche äußere, seine Druckstabilität erhöhende Umhüllung und / oder einen gegen Umwelteinflüsse und Beschädigung wirksamen schlauch- oder schichtförmigen Schutz, der schlagzäh und / oder flammhemmend ausgestattet sein kann, trägt.

## Claims

1. Composite component as push-pull link bar for rail vehicles with connecting elements at the ends for the axial introduction of compression and tension forces, with a rod-shaped structural element constructed for the reception and transmission of compression forces and with a prestressed fibre compound winding which is applied for the reception of tension forces in longitudinal direction of the rod-shaped structural element, extends over the connecting elements and consists of a defined number of loops of one or more reinforced fibres, which are embedded in a hardened matrix material, characterised thereby that the rod-shaped structural element (7) is executed as a sandwich compound construction, which consists of a longitudinally extending core (13) and two skins (14) which are stiff in compression in their longitudinal direction and are arranged on opposite longitudinal sides, which are free of the fibre compound winding (12), of the core (13).

2. Composite component according to claim 1, characterised thereby that the core (13) consists of a hard foam, a honeycomb material, thermoplastic moulded parts, pressed or powder-extruded sections, a unidirectional or multidirectional mono-fibre compound construction or hybrid-fibre compound construction or of wood.

3. Composite component according to claim 1 or 2, characterised thereby that the skins (14), which are stiff in compression, consist of reinforced fibres, which are embedded in a hardened matrix material and arranged to be unidirectional and axially parallel, and are glued to the core (13).

4. Composite component according to one of claims 1 to 3, characterised thereby that the connecting elements (8) are, for the transmission of the compression forces into the red-shaped structural element (7), areally supported at the axial end faces of the core (13) and the skins (14), and the skins (14) are in the force introduction region shape-lockingly embraced at two sides by a slot-shaped support groove (11).

5. Composite component according to one of claims 1 to 4, characterised thereby that the connecting elements (8) each comprise a respective bearing eye (9) which lies transversely to the longitudinal axis of the composite component and which is constructed for the pressing in of a rubber universal joint or radial universal joint.

6. Composite component according to one of claims 1 to 5, characterised thereby that the rod-shaped structural element (7) looped around by the fibre compound winding (12) carries an additional outer sheathing increasing its stability in compression and/or a hose-shaped or layer-shaped protection which is effective against environmental influences and damage and which can be rendered impact-resistant or flame-resistant.

## Revendications

1. Elément de structure composite utilisé comme barre tirée-poussée pour des véhicules ferroviaires, comportant aux extrémités des éléments de raccordement pour l'application axiale de forces de pression et de traction, un élément structure! en forme de tige réalisé pour encaisser et pour transmettre des forces de pression, et un enroulement de fibres composites précontraint qui est posé pour encaisser des forces de traction en direction longitudinale de l'élément structurel en forme de tige et qui s'étend par-dessus les éléments de raccordement et qui est constitué par un nombre défini de boucles d'une ou de plusieurs fibres de renforcement noyées dans un matériau de matrice durci, caractérisé en ce que l'élément structurel en forme de tige (7) est réalisé sous forme d'une construction composite en sandwich qui est constituée par un noyau (13) s'étendant longitudinalement et par deux manteaux (14) résistants à la pression en leur direction longitudinale, qui sont agencés sur des côtés longitudinaux du noyau (13) situés en vis-à-vis et libres par rapport à l'enroulement de fibres composites.

2. Elément de structure composite selon la revendication 1, caractérisé en ce que le noyau (13) est constitué en une mousse dure, en un matériau en nid d'abeilles, par des pièces moulées thermoplastiques, par des profilés pressés ou pultrudés, par une mono-construction ou construction hybride de fibres composites unidirectionnelle ou multi-directionnelle, ou bien en bois.

3. Elément de structure composite selon l'une ou l'autre des revendications 1 et 2, caractérisé en ce que les manteaux (14) résistants à la pression sont constitués en fibres de renforcement noyées dans un matériau de matrice durci et agencées de façon unidirectionnelle et parallèle à l'axe, et en ce qu'ils sont collés avec le noyau (13).

4. Elément de structure composite selon l'une quelconque des revendications 1 à 3, caractérisé en ce que les éléments de raccordement (8) sont appuyés par leur surface sur les faces frontales axiales du noyau (13) et des manteaux (14) pour transmettre les forces de pression dans l'élément structure! en forme de tige (7), et en ce que les manteaux (14) sont entourés des deux côtés en coopération de formes par une gorge de soutien en forme de fente (11), dans la région d'application de force.

5. Elément de structure composite selon l'une quelconque des revendications 1 à 4, caractérisé en ce que les éléments de raccordement (8) présentent respectivement un oeillet de montage (9) situé transversalement à l'axe longitudinal de l'élément de structure composite, qui est réalisé pour enfoncer un palier articulé en caoutchouc ou un palier articulé radial.

6. Elément de structure composite selon l'une quelconque des revendications 1 à 5, caractérisé en ce que l'élément structurel en forme de tige (7) entouré par l'enroulement de fibres composites (12) porte une enveloppe extérieure supplémentaire augmentant sa solidité à la pression et/ou une protection en forme de tuyau ou de couche efficace à l'encontre des intempéries et des endommagements, qui peut être réalisée de façon résistante aux coups et/ou à la combustion.
